# EUROPÄISCHE PATENTANMELDUNG

(11) **EP 1 826 850 A2**
(43) Veröffentlichungstag der Anmeldung: **29.08.2007**
(21) Anmeldenummer: 07002889.9
(22) Anmeldetag: 12.02.2007
(51) Int. Cl.: H01M 8/02

(54) **Verfahren zum Fügen von Bipolarplatten, insbesondere für einen Brennstoffzellenstapel eines Fahrzeugs**

(30) Priorität: 25.02.2006 DE 102006008830; 11.07.2006 DE 102006032324
(71) Anmelder: Behr GmbH & Co. KG, 70469 Stuttgart (DE)
(72) Erfinder: Damsohn, Herbert, Dr.-Ing., 73773 Aichwald (DE); Kaiser, Wolfram, Dr.-Ing., 70437 Stuttgart (DE); Watzlawski, Markus, 73760 Ostfildern (DE)

(57) **Zusammenfassung**

Die Erfindung betrifft ein Verfahren zum Fügen von Bipolarplatten (4a, 4b), insbesondere für einen Brennstoffizellenstapel, wobei zumindest zwei, insbesondere geprägte Platten (4a, 4b) in eine vorgegebene Fügeposition (5) zueinander angeordnet und stoff- und formschlüssig, durch Schweißen gefügt werden.

## Beschreibung

Die Erfindung betrifft ein Verfahren zum Fügen von Bipolarplatten, insbesondere für einen Brennstoffzellenstapel eines Fahrzeugs. Des Weiteren betrifft die Erfindung ein Werkzeug zum Durchführen des Verfahrens.

Die DE 100 15 360 A1 beschreibt beispielsweise eine Bipolarplatte für eine Brennstoffzelle, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem (auch Strömungsfeld genannt) für ein Kühlmittel und an den Außenflächen jeder Platte ein Kanalsystem für Gasströme.

Verfahren zum Fügen der Platten eines Brennstoffzellenstapels sind bekannt. Beispielsweise werden Platten, die aus Graphitmaterial bestehen, üblicherweise mit wärmehärtenden Zweikomponenten-Epoxydharz-Klebstoffen verbunden bzw. gefügt. Die Zeitdauer, bis die gefügten Platten bei diesem Klebedicht-Prozess für einen weiteren Verarbeitungsschritt verfügbar sind, beträgt mehrere Minuten.

Aus der DE 102 51 775 A1 ist ein weiteres Verfahren zum Fügen von Plattenelementen einer Brennstoffzelleneinheit bekannt, bei welchen ein strahlungsaktivierbares Klebemittel auf mindestens eines der mindestens zwei Plattenelemente aufgebracht wird. Anschließend wird das Klebemittel während einer vorbestimmten Zeitdauer bestrahlt und die mindestens zwei Plattenelemente in der gewünschten Fügeposition angeordnet und unter Druck- und/oder Wärmeeinwirkung gefügt. Dieses mehrstufige Fügeverfahren - erst Aufbringen eines Klebemittels und anschließend Bestrahlen und Fügen unter Druck- und/oder Wärmeeinwirkung - ist besonders aufwendig und zeitintensiv.

Darüber hinaus ergeben sich bei der Verwendung von metallischen Bipolarplatten in der korrosiven Umgebung einer Brennstoffzelle, insbesondere einer sauren PEM-BrennstoffZelle (PEM = proton exchange membran), eine Anzahl von Anforderungen an das Bauteil, deren Erfüllung für die dauerhafte Funktion unerlässlich ist.

Insbesondere im Hinblick auf die Aufrechterhaltung von:
- einer hohen elektrischen Bauteilleitfähigkeit,
- einer zuverlässigen Trennung der Betriebs- und Kühlmedien voneinander und
- einem ausreichenden Schutz der Membran-Elektroden-Einheit (kurz MEA genannt, MEA = Membrane Electrodes Assembly) vor der Immigration von Metall-Ionen in den Elektrolyten
müssen daraus resultierende Spezifikationen hinsichtlich Plattenmaterial und mediendichte Fügestelle eingehalten werden, da sonst mit einer erheblichen Degradation der Zellleistung bis hin zur Zerstörung der Brennstoffzelle gerechnet werden muss.

Der Erfindung liegt daher die Aufgabe zugrunde, ein Verfahren zum Fügen von mindestens zwei Bipolarplatten anzugeben, welches besonders einfach und schnell ausgeführt werden kann. Darüber hinaus ist ein besonders geeignetes Werkzeug anzugeben.

Beim erfindungsgemäßen Verfahren zum Fügen von Bipolarplatten, insbesondere für einen Brennstoffzellenstapel, werden zumindest zwei, insbesondere geprägte, wie umgeformte, Platten in eine vorgegebene Fügeposition zueinander angeordnet und stoff- und formschlüssig durch Schweißen gefügt. Gegenüber herkömmlichen Klebe- und Pressverfahren wird beim Fügen durch Schweißen der Zusammenhalt durch Stoffvereinigung, insbesondere durch Verschmelzung der Plattenmaterialien bewirkt. Dies ermöglicht eine besonders gute Mediendichtheit. Darüber hinaus kann das Verfahren in wenigen Schritten - Positionieren der zu fügenden Bauteile zueinander und Schweißen der Platten - durchgeführt werden, so dass der gesamte Herstellungsprozess besonders schnell, präzise und sicher ausgeführt werden kann.

In einer bevorzugten Ausführungsform werden die Platten im Kondensator-Entladungs-Schweißverfahren gefügt. Dabei erfolgt das Dichtschweißen der Platten durch Entladen von Kondensatoren. Die Einkopplung von elektrischer Energie durch Entladen der Kondensatoren bzw. von Kondensatorbänken über Elektroden wird mit sehr kurzen Schweißzeiten von kleiner 30 ms, insbesondere von 10 ms bis 20 ms durchgeführt. Die Anwendung eines derartigen Schweißverfahrens ermöglicht eine hohe Präzision der Füge- oder Schweißnaht ohne Verziehen und somit eine hohe Dichtheit der Fügestelle.

Die Platten werden vorzugsweise derart gefügt, dass mindestens 80 % der einzubringenden Schweißenergie innerhalb der ersten 10 ms nach Beginn der Kondensatorentladung fließen.

Für einen präzisen Füge- oder Schweißnahtverlauf werden die Platten in der Fügeposition vor dem Schweißen miteinander verpresst. Vorzugsweise werden die zu fügenden Platten unter Aufbringung einer definierten Vorpressung der Fügestelle, besonders bevorzugt mit einer Vorpressung von 0,1 bar bis 100 bar, insbesondere von 10 bar bis 30 bar, jeweils bezogen auf die Plattenfläche vorgespannt. Je nach Art, Größe, Dicke und Material der Platten kann der Anpressdruck auch zwischen 100 bar und 2000 bar betragen.

In einer besonders einfachen Ausführungsform wird der vorgegebene Anpressdruck durch Andrücken eines Formelektrodenpaares an der Fügeposition, insbesondere entlang einer Fügenaht, eingestellt. Mit anderen Worten:

Die Vorspannung der zu fügenden Bauteile oder Platten erfolgt lokal durch Andrücken des Formelektrodenpaares entlang einer gewünschten Fügenaht, wodurch im Folgenden die für die Verbindung erforderliche elektrische Energie eingekoppelt und beide Bauteile oder Platten mediendicht miteinander verschweißt werden. Während des Schweißvorganges werden bevorzugt die beiden Elektroden definiert nachgeführt, um eine verbesserte Schweißverbindung zu gewährleisten.

Zweckmäßigerweise werden die Platten derart zueinander angeordnet, dass aneinander liegende Plattenstrukturen, insbesondere Nuten miteinander gefügt werden. Je nach Plattenstruktur, beispielsweise mäanderförmige Plattenstruktur werden die aneinander angrenzenden Nuten der zwei Platten miteinander verbunden. Gegenüberliegende Erhebungen der zwei Platten bilden einen kanalförmigen Hohlraum zur Einleitung eines Mediums.

Vorzugsweise werden die Platten aus gleichem oder unterschiedlichem, metallischem Material gefertigt. Durch das erfindungsgemäße Verfahren zur Herstellung der Bipolarplatte können Bipolarplatten aus unterschiedlichem Material miteinander gefügt, insbesondere verschweißt werden.

In einer möglichen Ausführungsform sind die Formelektroden als spitze, einander gegenüberstehende Elektroden ausgeführt, die eine linienförmige Kontaktfläche mit den zu fügenden Platten oder Halbschalen aufweisen. Dies führt beim Schweißen zu einem besonders geringen Energiebedarf. Nachteilig bei dieser Ausführung ist die Tatsache, dass die spitzen Elektroden sehr empfindlich gegenüber Beschädigungen sind.

In einer weiteren Ausführung sind die Formelektroden als ebene und flache Elektroden ausgeführt. Diese flachen Formelektroden sind besonders robust und unempfindlich. Um derartige ebene und somit robuste Elektroden verwenden zu können, ist in zumindest eine der zu fügenden Platten eine Sicke eingebracht, die mit der benachbarten Platte eine Linienberührung aufweist. Da bei diesem Fügeprozeß fertigungsbedingt ein Luftspalt entstehen kann, der, bezogen auf die aktive Zellfläche der Bipolarplatte zu einer Reduzierung der elektrischen Leitfähigkeit der Bipolarplatte senkrecht zur Plattenrichtung führen könnte, weist die Bipolarplatte eine Geometrie auf, die diesen Luftspalt im Bereich der aktiven Zellfläche so kompensiert, dass ein stoffschlüssiger elektrischer Kontakt hergestellt wird. Dies kann durch Anpassung der Umformtiefe der ungefügten Platten im Bereich der aktiven Zellfläche dahingehend erfolgen, dass der Luftspalt in diesem Bereich nach dem Fügeprozeß zumindest teilweise verschwindet. Eine andere mögliche Ausführung liegt in der Einbringung einer Doppelsicke in einer der Platten im Fügebereich, die die zu fügenden Platten bzw. die Fügesicke beim Schweißprozess nur lokal nachformt und ebenfalls zu einem stoffschlüssigen Kontakt im Bereich der aktiven Zellfläche führt.

Bei einer weiteren Ausführungsform mit Blick auf die einfache Handhabung der Platten oder Teile sind zwei unterschiedlich stark umgeformte Fügesicken in eine der Platten im Fügebereich eingearbeitet, die beim Fügevorgang gegeneinander selbstzentrierend wirken und sich für eine besonders gute Positionierung eignen.

Darüber hinaus können die zu verbindenden Platten im Fügebereich in einer weiteren möglichen Ausführungsform mit einer geeigneten Beschichtung zur Verbesserung des Schweißstromveriaufs bzw. zur Reduzierung der Schmelztemperatur durch beschichtungsimmanente Schmelzpunktemiedriger - bei Stahl z.B. Kohlenstoff - versehen sein, während der nicht zu fügende Bereich gleichzeitig mit einer elektrisch schlecht leitenden und nach dem Fügevorgang ggf. entfernbaren Beschichtung zur Vermeidung von Schweißfehlströmen versehen werden kann. Alternativ zum Einsatz einer entsprechenden Beschichtung ist auch ein Aufrauhen der Oberfläche der zu fügenden Platten oder Werkstücke möglich, um die Kontaktfläche für den Schweißprozess vorzukonditionieren.

In einer weiteren besonders bevorzugten Ausführung wird die Einleitung des Schweißstroms in das zu fügende Bauteil, d.h. die Platte, durch den Einsatz eines Werkzeugs mit segmentiertem Stromeinleitungsbereich gezielt dahingehend durchgeführt, dass der Schweißstrom in Wellen rotierend, linear oder lokal gesteuert in die jeweilige Platte eingebracht werden kann. Durch die Segmentierung des Schweißwerkzeuges kann der lokale Stromfluss durch die zu fügenden Platten definiert eingestellt werden, insbesondere kann die Fügeaufgabe in mehrere Teilschritte zerlegt werden, wodurch ein erheblich verbessertes und gutes Fügen erzielt wird.

In einer weiteren Ausführungsform wird der Schweißstrom, der durch die Platten oder Fügeteile fließt, zeitlich versetzt, überlappend und/oder segmentweise aufgebracht, wobei hier in Wellen von einer Seite zur anderen, von beiden Seiten gleichzeitig oder vom Zentrum ausgehend und zu den Seiten verlaufend geschweißt werden kann.

Darüber hinaus kann das Schweißwerkzeug, d.h. die jeweilige Formelektrode, sowohl entlang der x-Achse als auch der y-Achse, d.h. in beide Richtungen, segmentiert sein, so dass auch eine kreisförmig umlaufende Schweißstromwelle bei umlaufenden Fügenähten erzielt werden kann.

In einer besonders bevorzugten Ausführung besteht eine erfindungsgemäße Bipolarplatte aus zwei geprägten Platten oder Halbschalen aus Metall, wobei eine Halbschale aus Titan oder aus einer titanhaltigen Legierung besteht, die mittels eines Nitrierprozesses mit einer titannitridhaltigen Oberfläche versehen wird. Die andere Platte oder Halbschale besteht aus einem Edelstahl, z. B. einem Material entsprechend dem in DE 101 94 846 A1 offenbarten Edelstahlprodukt mit hervorstehenden Borcarbideinschlüssen. Alternativ kann eine oder mehrere der Platten aus Stahl, Nickel oder Aluminium bestehen. Vorzugsweise beträgt die Dicke der Platten 0,05 mm bis 1 mm, vorzugsweise 0,075 mm bis 0,5 mm.

Die Halbschalen aus einem oder mehreren der oben beschriebenen Materialien werden durch das beschriebene Kondensator-Entladungs-Schweißverfahren miteinander verbunden und weisen eine hervorragende Korrosionsbeständigkeit und elektrische Leitfähigkeit beim Einsatz in einer Brennstoffzelle auf, wenn die Titanseite für die Kathodenseite und die Edelstahlseite für die Anodenseite verwandt wird. Aufgrund des Ersatzes des teuren Titans auf der Anodenseite ergeben sich ein deutlicher Kostenvorteil gegenüber Bipolarplatten aus zwei Titanhälften und eine deutliche Steigerung der Korrosionsbeständigkeit gegenüber Bipolarplatten aus zwei Edelstahlhätften.

In einer weiteren, bevorzugten Ausführung wird die Platte mit einer Schutzschicht, insbesondere einer Korrosionsschutzschicht versehen. Diese Korrosionsschutzschicht kann in einem eigenen Verfahrensschritt physikalisch auf das Bauteil oder die Platte aufgebracht werden, z.B. durch galvanisches Beschichten, und/oder sich auf dem Bauteil oder die Platte basierend auf den verwandten Bauteilmaterialen in einer spezifischen Atmosphäre selbst bilden. Ein Beispiel hierfür ist das Nitrieren von Oberflächen. Bei diesem Verfahren bilden sich an der Bauteiloberfläche stickstoffhaltige Metallverbindungen (so genannte "Nitride") unter Zuhilfenahme einer geeigneten Gasatmosphäre und den erforderlichen Temperaturen und Drücken.

Aufgrund der unterschiedlichen Korrosionsumgebungen auf der Anoden- und auf der Kathodenseite einer Brennstoffzelle ist es aus technischen und/oder aus wirtschaftlichen Gründen zweckmäßig, unterschiedliche Beschichtungen auf der Bipolarplattenoberfläche einzustellen. Die Beschichtungen unterscheiden sich dabei hinsichtlich Art und/oder Aufbau und/oder Dicke.

Insbesondere bei Verwendung eines Verfahrens, bei dem sich die Oberflächenbeschichtung der jeweiligen Bipolarplatte selbständig aus dem Basismaterial bzw. durch eine Behandlung in einer definierten Atmosphäre (z.B. Wärrnebehandlung und Nitrieren) einstellt, ergeben sich deutliche technische und wirtschaftliche Vorteile, wenn unterschiedliche Basismaterialien auf beiden Seiten (Anodenseite, Kathodenseite) eingesetzt werden, da dann eine genaue Adaption der Schutzwirkung der Beschichtung an den Anwendungsfall möglich ist.

Erfindungsgemäß ist als Werkzeug zur Durchführung des Verfahrens ein Kondensator-Entladungs-Schweißgerät vorgesehen. Dabei ist ein dem Kondensator-Enfladungs-Schweißgerät zugehöriges Elektrodenpaar als Formelektrodenpaar ausgebildet. Zweckmäßigerweise dient das Formelektrodenpaar dem Anpressen und dem anschließenden Verschweißen der zu fügenden Platten durch Entladen von Kondensatoren, indem über das Formelektrodenpaar die elektrische Energie in die Fügenaht eingekoppelt wird. Somit können zusätzliche Werkzeuge entfallen. Das Werkzeug weist zudem eine kompakte Bauform auf und kann flexibel eingesetzt werden.

In einer besonders bevorzugten Ausführungsform wird dieses Werkzeug im Lasersinter-Verfahren durch die Versinterung pulverförmiger Metalle, Legierungen und Superlegierungen hergestellt. In einer weiteren besonders bevorzugten Ausführung werden Pulver auf Basis von zumindest einem der folgenden Elemente: Ag, Al, C, Cu, Co, Cr, Fe, H, Mn, Mo, Nb, Ni, O, Si, Sn, Ta, Ti , V, W, Y, Zn oder deren chemischen Verbindungen, ihren Legierungen, sowohl in Reinform oder auch als Pulvergemische verwendet.

In einer weiteren besonders bevorzugten Ausführung werden die Formelektroden aus mehreren Schichten unterschiedlicher Pulvermaterialien oder - Gemischen dahingehend aufgebaut, dass die Flusswege des elektrischen Stromes beim Fügeprozeß durch lokal unterschiedliche Leitfähigkeiten und unterschiedliche Zähigkeiten des Elektrodenmateriafs gezielt eingestellt werden können.

Gemäß einer Ausführungsform umfasst ein Werkzeug einen Kern aus gutleitendem Cu und eine Randschicht aus abnutzungsbeständigem W.

In einer weiteren bevorzugten Ausführung werden die Formelektroden aus mehreren Schichten unterschiedlicher Pulvermaterialien und -Gemischen so aufgebaut, dass sich eine harte, abnutzungsbeständige Oberfläche auf einem weich-zähen Elektrodenkern einstellt. Dadurch wird die Gefahr vor mechanischer Beschädigung eines Werkzeuges aus hart-sprödem Material bei der Montage reduziert und die Haltbarkeit des Werkzeuges erhöht.

In einer weiteren besonders bevorzugten Ausbildung dieses Konzepts wird eine Randschicht eingestellt, die aus einem härtbaren Material besteht und mit einem üblichen Härtungsverfahren gehärtet werden kann.

Gemäß einer Ausführungsform kommt ein Bauteil mit einem Kern aus Ag und einer Randschicht aus einer einem Werkzeugstahl entsprechenden Legierung, die mit einem Nitrierverfahren gehärtet wird, zur Verwendung.

In einer weiteren besonderen Ausführung werden die Formelektroden auf ein massives Bauteil, beispielsweise eine Kupferplatte, aufgesintert, wobei in einer weiteren besonders bevorzugten Ausführung die Kupferplatte bereits im Sinne der Formelektroden konturiert sein kann, so dass hier bereits ein leitfähiger Kern vorliegt, der dann mit einer standfesten Oberfläche aus Lasersintermaterial versehen wird.

In einer weiteren besonders bevorzugten Ausführung werden die Formelektroden nach dem Sinterprozess poliert, um lokale Stromspitzen und eine erhöhte Abnutzung zu vermeiden.

Ausführungsbeispiele der Erfindung werden anhand einer Zeichnung näher erläutert. Darin zeigt:
- Fig. 1: schematisch zwei zu fügende Bipolarplatten zwischen einem Formelektrodenpaar eines Kondensator-Entladungs-Schweißgeräts an einer Fügeposition;
- Fig. 2: schematisch zwei zu fügende Bipolarplatten zwischen einem Formelektrodenpaar eines Kondensator-Entladungs-Schweißgeräts an einer Fügeposition,
- Fig. 3 bis 12: schematisch verschiedene Ausführungsformen des Formelektrodenpaares hinsichtlich deren Form, Abmessungen und Art sowie Aufbau.

Einander entsprechende Teile sind in allen Figuren mit den gleichen Bezugszeichen versehen.

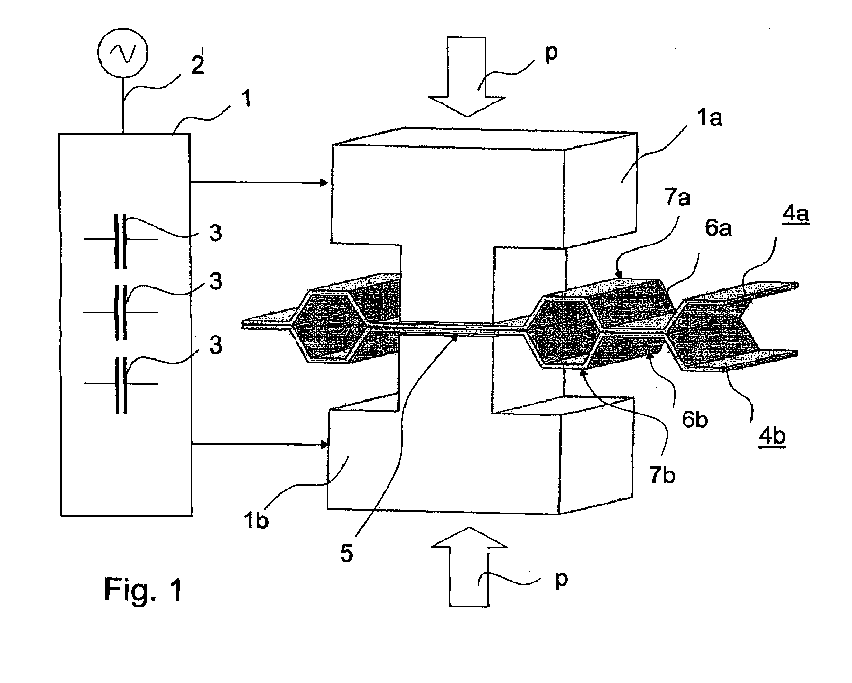

Die Figur 1 zeigt in schematischer Darstellung ein Kondensator-Entladungs-Schweißgerät 1, dass einen Netzanschluss 2 zum Laden einer Anzahl von Speicherkondensatoren 3 umfasst, die zum stoff- und formschlüssigen Fügen von zwei Bipolarplatten 4a, 4b durch Schweißen entladen werden. Hierzu weist das Kondensator-Entladungs-Schweißgerät 1 im Bereich einer vorgebbaren Fügeposition 5 ein Paar Formelektroden 1 a, 1 b auf.

Zum Fügen der beiden Bipolarplatten 4a und 4b werden diese zuerst in der Fügeposition 5 zueinander positioniert. Anschließend werden die Bipolarplatten 4a, 4b durch Aufdrücken der Formelektroden 1a, 1 b in der Fügeposition 5 miteinander verpresst, so dass die Platten 4a, 4b hinreichend fixiert sind. Das An- oder Verpressen der Bipolarplatten 4a, 4b erfolgt definiert, d.h. unter Aufbringung eines definierten Anpressdruck p von 0,1 bar bis 100 bar, insbesondere von 10 bar bis 60 bar. Vorzugsweise werden die beiden Bipolarplatten 4a, 4b entlang einer vorgegebenen Fügenaht miteinander verpresst.

Die Bipolarplatten 4a, 4b weisen verschiedenartige Oberflächenstrukturen auf. Beispielsweise können sie Kanalstrukturen in Form von Nuten oder Kanälen aufweisen. Im Ausführungsbeispiel sind die Bipolarplatten 4a, 4b als geprägte Metallplatten oder Metallbleche ausgeführt, die jeweils mit Nuten 6a, 6b und Erhebungen 7a, 7b versehen sind.

In der Fügeposition 5 werden die Bipolarplatten 4a, 4b derart zueinander positioniert, dass deren Nuten 6a, 6b aneinander anliegen und miteinander in einem ersten Schritt verpresst und in einem zweiten Schritt mittels Kondensator-Entladungs-Schweißverfahren gefügt werden. Somit wird sowohl das Anpressen als auch das Schweißen mit ein- und demselben Werkzeug ausgeführt. Dies ermöglicht ein besonders einfaches Herstellungsverfahren in wenigen Schritten und mit nur einem Werkzeug.

Die vorgespannten Bipolarplatten 4a, 4b werden beim Schweißen durch Einkopplung der elektrischen Energie an der Fügeposition 5 mediendicht miteinander verschweißt. Dabei fließen mindestens 80 % der einzubringenden Schweißenergie innerhalb der ersten 10 ms nach Beginn der Entladung der Kondensatoren 3. Die maximale Schweißzeit beträgt 30 ms.

Als Bipolarplatten 4a, 4b werden insbesondere metallische Platten oder Metallbleche verwendet. Beispielsweise können die Bipolarplatten 4a, 4b aus zwei geprägten Halbschalen aus Titan oder aus einer titanhaltigen Legierung gefertigt sein. Alternativ kann für eine oder beide Platten ein Edelstahl, insbesondere ein Edelstahlblech mit hervorstehenden Borcarbideinschlüssen verwendet werden. Ob beide Platten aus Titan oder beide aus Edelstahl oder einer anderen metallischen Materialkombination oder aus gleichem metallischen Material sind, richtet sich nach der Vorgabe hinsichtlich der Korrosionsbeständigkeit und der elektrischen Leitfähigkeit. Edelstahlplatten sind besonders korrosionsbeständig.

Auch kann zumindest eine oder beide Platten 4a, 4b vor dem Fügen mit einer Schutzschicht, beispielsweise mit einer Korrosionsschutzschicht versehen werden. Hierzu werden die Platten 4a, 4b galvanisch beschichtet. Alternativ kann die Schutzschicht durch Nitrieren der Oberfläche der Platten 4a, 4b gebildet werden.

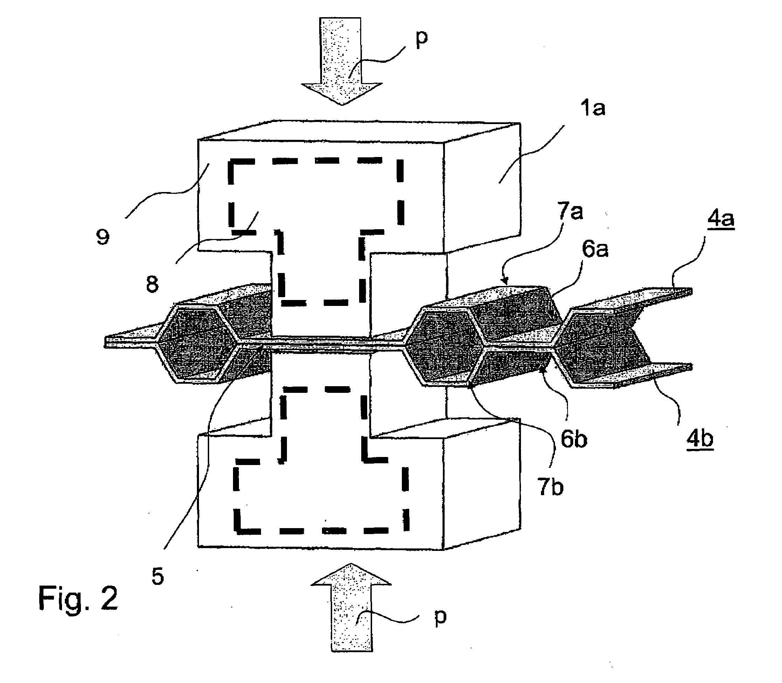

In dem Ausführungsbeispiel gemäß Fig. 2 wird ein Werkzeug im Lasersinter-Verfahren durch die Versinterung pulverförmiger Metalle oder Legierungen hergestellt. Das Werkzeug umfasst dabei einen Kern 8 aus gutleitendem, weichzähem Cu und eine Randschicht 9 aus hartsprödem W. Dadurch wird die Gefahr mechanischer Beschädigung des Werkzeuges bei der Montage reduziert und die Haltbarkeit des Werkzeuges erhöht.

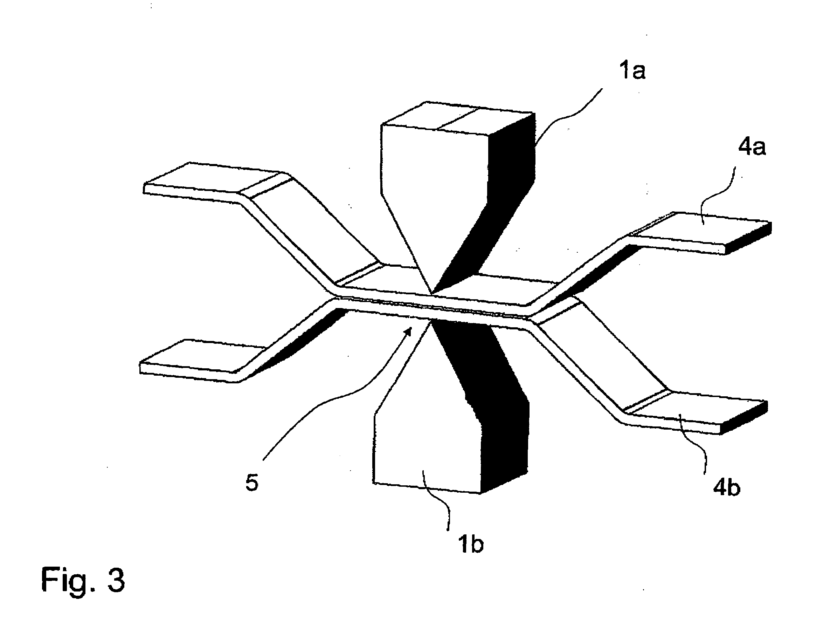

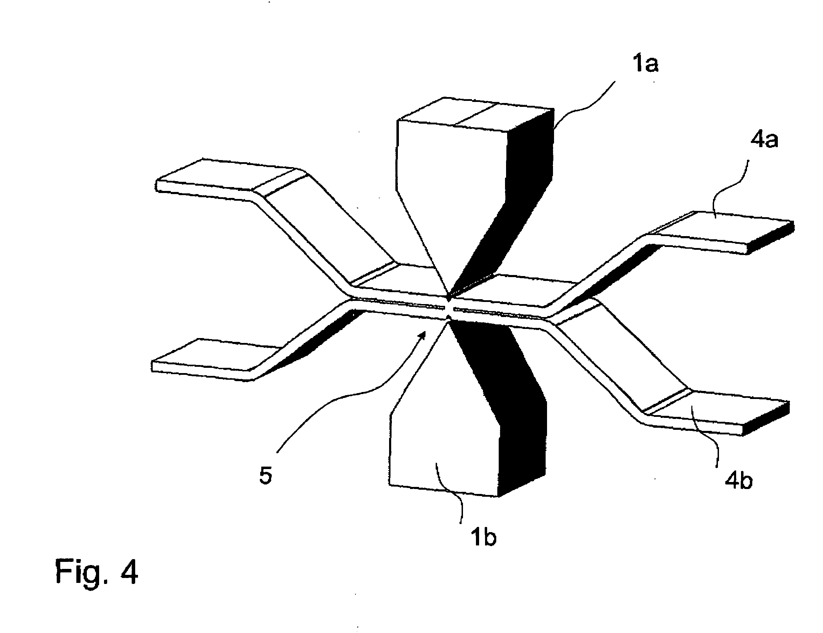

Ein weiteres Ausführungsbeispiel ist in den Figuren 3 und 4 dargestellt. Die Formelektroden 1a, 1b gemäß den Figuren 3 und 4 sind am Schweißende spitz ausgeführt und im Fügebereich 5 und somit in der Fügeposition der beiden Platten 4a, 4b einander gegenüberstehend angeordnet. Hierdurch ergibt sich eine linienförmige Kontaktfläche der zu fügenden Platten 4a, 4b, wodurch ein besonders geringer Energiebedarf beim Schweißen erzielt wird. In Figur 3 ist die Anordnung aus Formelektroden 1a, 1b und Platten 4a, 4b vor dem Fügeprozeß und in Figur 4 nach dem Fügeprozeß dargestellt.

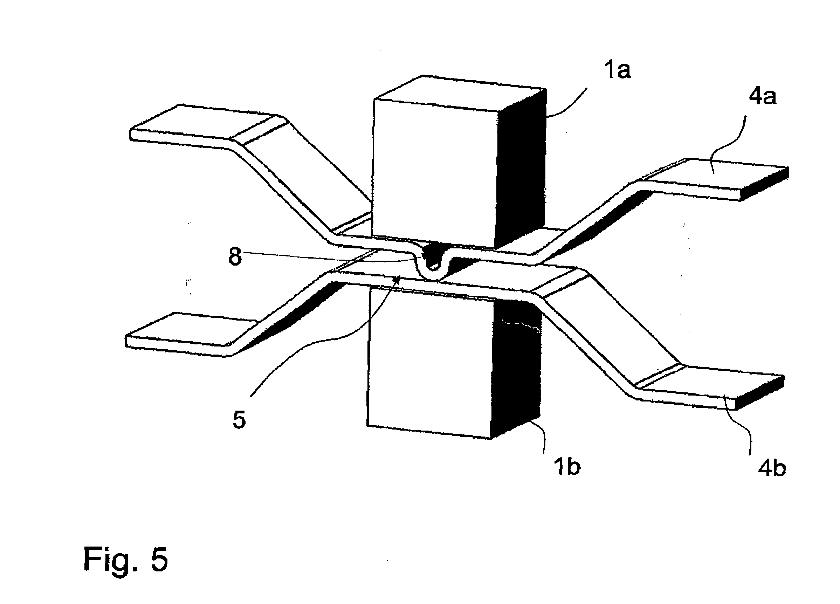

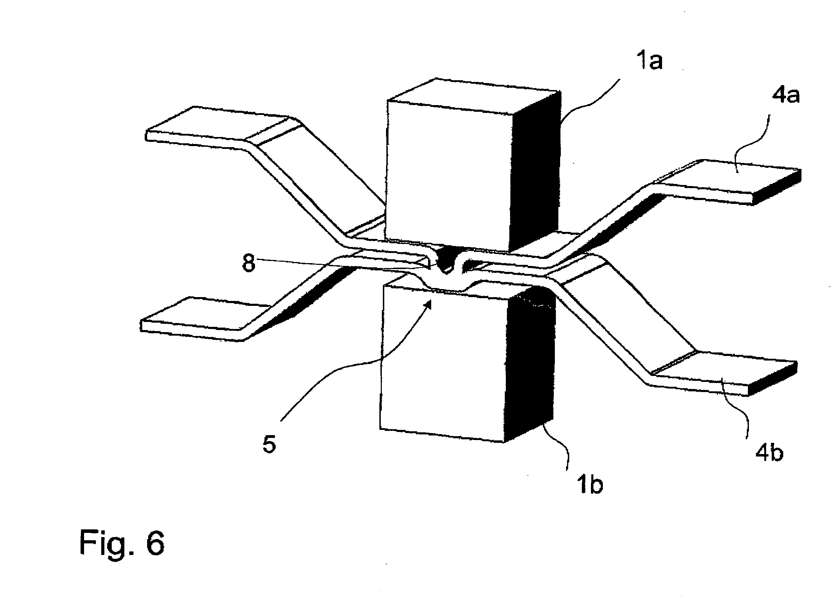

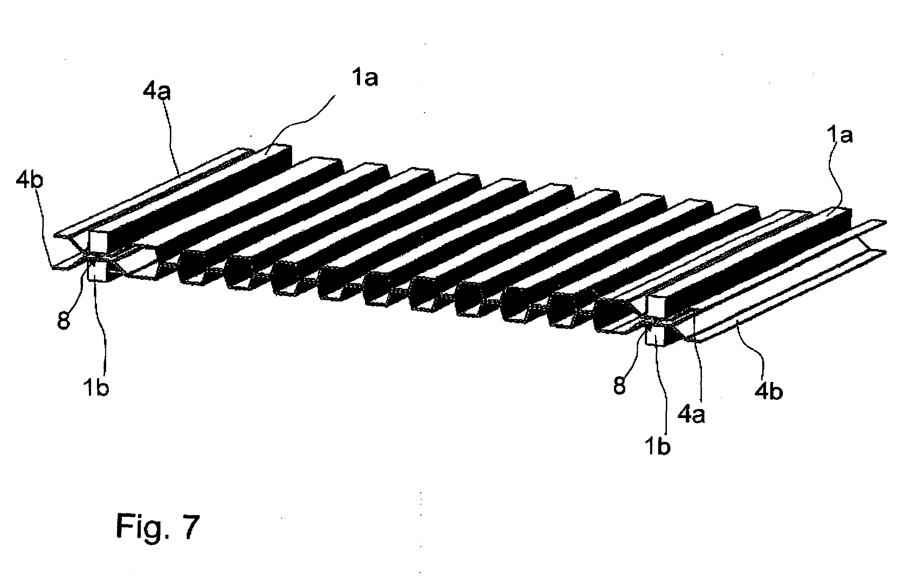

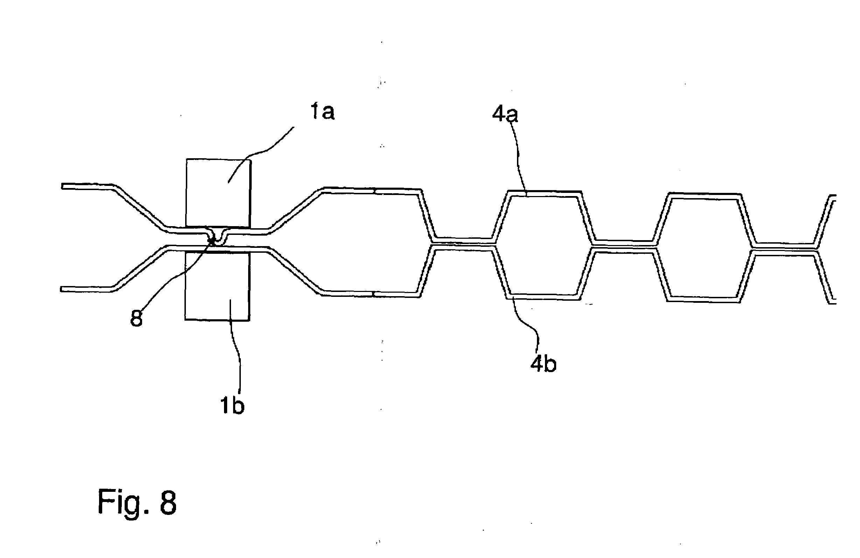

Alternativ können die Formelektroden 1a, 1b eben und flach ausgeführt sein, die im Fügebereich 5 einander gegenüberstehen, wie dies in den Figuren 5 und 6 dargestellt ist. Diese relativ breiten, ebenen Elektroden 1 a, 1 b sind besonders robust und unempfindlich. Hierbei ist in zumindest eine der zu fügenden Platten 4a eine Sicke 8 eingebracht, die mit der benachbarten Platte 4b linienförmig kontaktiert. Die Figur 5 zeigt die Anordnung vor dem Fügen, die Figur 6 nach dem Fügen. Da bei diesem Fügeprozeß fertigungsbedingt ein Luftspalt entstehen kann, der, bezogen auf die aktive Zellfläche der Bipolarplatte zu einer Reduzierung der elektrischen Leitfähigkeit der Bipolarplatte senkrecht zur Plattenrichtung führen könnte, weist eine entsprechend ausgebildete Bipolarplatte eine Geometrie auf, die diesen Luftspalt im Bereich der aktiven Zellfläche so kompensiert, dass ein stoffschlüssiger elektrischer Kontakt hergestellt wird. Dies kann durch Anpassung der Umformtiefe der ungefügten Platten 4a, 4b im Bereich der aktiven Zellfläche dahingehend erfolgen (siehe Figuren 7 und 8), dass der Luftspalt in diesem Bereich nach dem Fügeprozeß zumindest teilweise verschwindet.

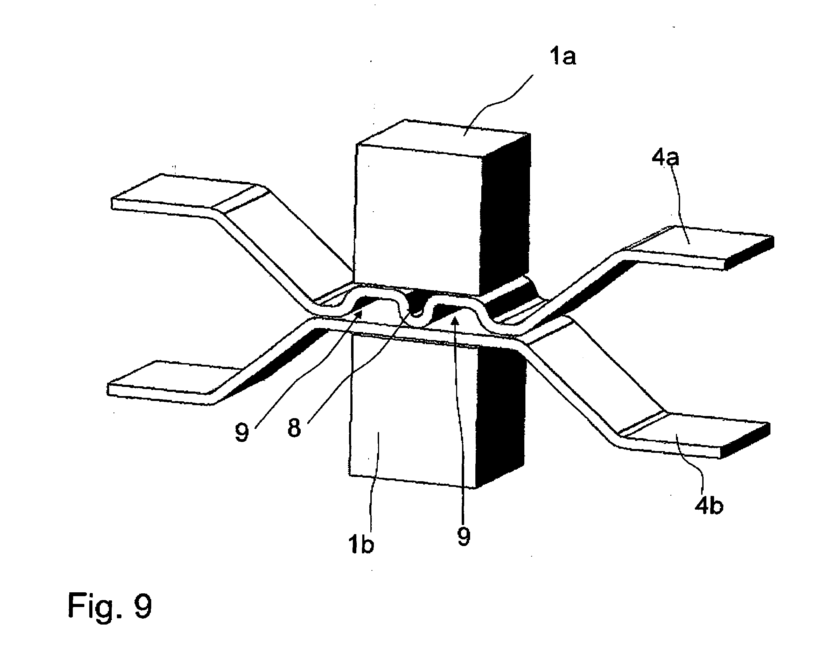

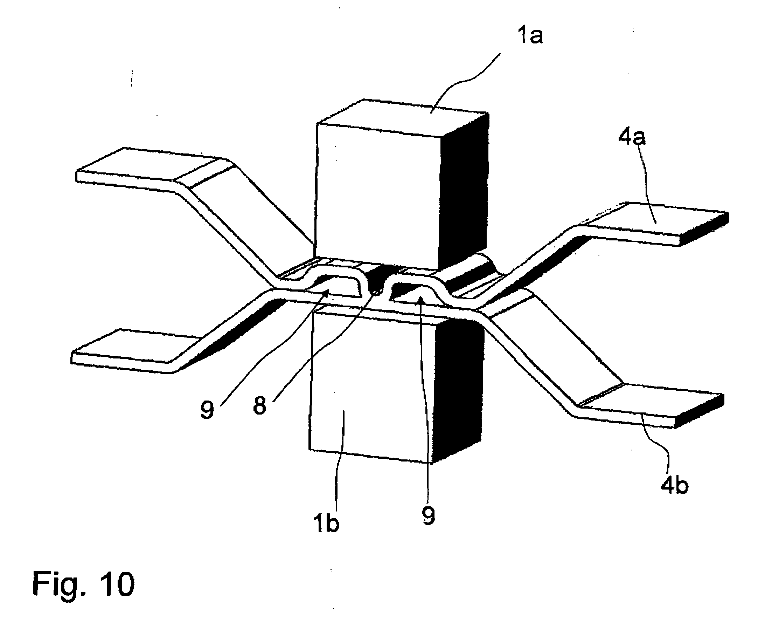

In den Figuren 9 und 10 ist eine andere mögliche Ausführung dargestellt. Dabei ist im Fügebereich 5 eine Doppelsicke 9, die die zu fügenden Platten 4a, 4b bzw. die Fügesicke 8 beim Schweißprozess nur lokal nachformt. Dies führt ebenfalls zu einem stoffschlüssigen Kontakt im Bereich der aktiven Zellfläche. In der Figur 9 ist die Anordnung vor und in Figur 10 nach dem Fügevorgang dargstellt.

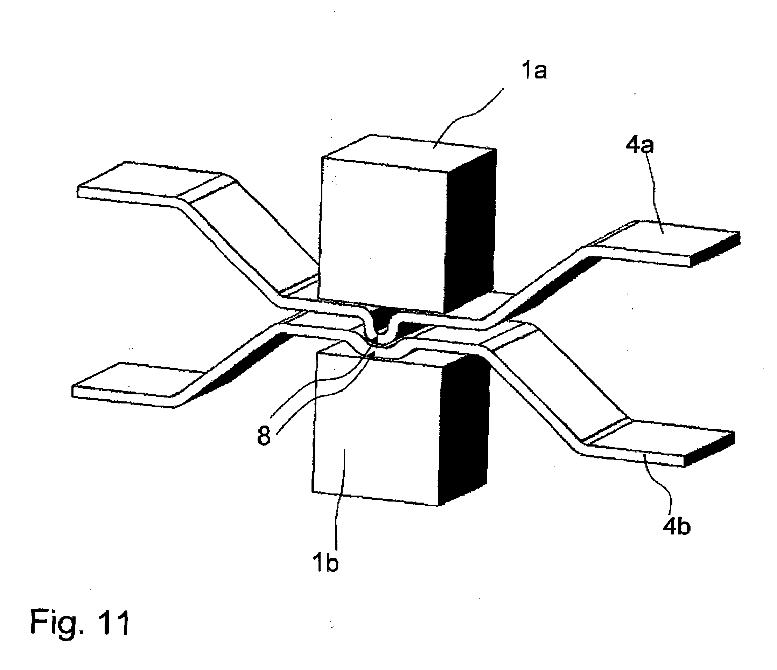

Figur 11 zeigt ein weiteres Ausführungsbeispiel mit zwei unterschiedlich stark umgeformten Fügesicken 8, d.h. in jeder Platte 4a, 4b ist eine entsprechende Sicke 8 eingebracht. Durch die gegenüberstehende Anordnung der beiden gleichgerichteten Sicken 8 wirken diese beim Fügevorgang gegeneinander selbstzentrierend und eignen sich für eine besonders gute Positionierung der Platten 4a, 4b. Figur 11 zeigt die Anordnung vor dem Fügevorgang. Figur 6 zeigt die Anordnung nach dem Fügevorgang. Im gefügten Zustand ist die Anordnung im Wesentlichen gleich wie die Anordnung mit nur einer Sicke 8 in einer der Platten 4a, 4b gemäß Figur 6.

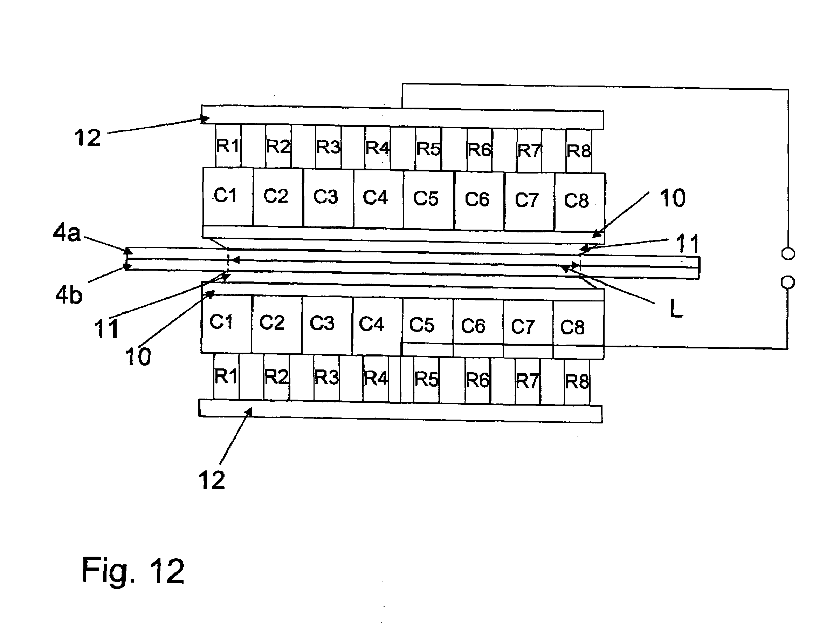

Figur 12 zeigt Formelektroden 1a, 1b, die zusätzlich segmentiert sind. Dabei erfolgt die Einleitung des Schweißstroms in die jeweils zu fügende Platte 4a bzw. 4b durch den Einsatz von Elektroden 1 a und 1b mit segmentiertem Stromeinleitungsbereich mit einer vorgegebenen Anzahl von Segmenten C1 bis C8. Die Stromeinleitung erfolgt gezielt dahingehend, dass der Schweißstrom in Wellen rotierend, linear oder lokal gesteuert in die betreffende Platte 4a und/oder 4b eingebracht werden kann. Die Elektroden 1 a und 1 b sind als ein Paar eines segmentierten Schweißwerkzeugs ausgeführt. Im Detail sind in der Figur 12 die zu fügenden Platten 4a, 4b mit einer vorgegebenen oder gewünschte Fügelänge L gezeigt. Die Fügelänge L wird durch Einsatz von geeigneten und entsprechende Abmessungen aufweisenden Werkzeugplatten 10 und 11 erreicht, die an jeder Formelektrode 1a und 1b im Fügebereich 5 vorgesehen und einander gegenüberliegend angeordnet sind. Durch Zusammendrücken der Formelektroden 1a und 1b und somit der Werkzeugplatten 10 und 11 werden die zu fügenden Platten 4a, 4b im Bereich der Fügenaht zusammendrückt. Dabei erfolgt eine Stromeinleitung in die Werkzeugplatten 10 und 11 über die segmentierten Formelektroden 1a, 1b mit nebeneinander liegenden und voneinander elektrisch isolierten Stromleitsegmenten C1 bis C8. Die Anzahl und die Form der Stromleitsegmente C1 bis C8 korrespondiert mit der Länge und den Abmessungen der Werkzeugplatten 10 und 11 und diese korrespondieren hinsichtlich ihrer Abmessungen mit der gewünschten Abmessung der Fügenaht. Die jeweiligen Stromleitsegmente C1 bis C8 der Formelektroden 1 a und 1b können darüber hinaus über Relais R1 bis R8 zu- bzw. abgeschaltet werden. Die Stromeinleitung in diese Relaisbank erfolgt über eine weitere zugeordnete Werkzeugplatte 12. Wesentliche Eigenschaft der Werkzeugplatten 12 und 10 ist, dass diese Werkzeugplatten 12 und 10 derart dünn gewählt wird, dass keine problematische Stromverteilung in Plattenquerrichtung erfolgt und der Schweißstrom mit Masse durch die aufgeschalteten Stromleitsegmente C1 bis C8 fließen kann. Typische Dickenabmessungen liegen hier im Bereich einiger Millimeter bis zu einigen wenigen Zentimetern.

In einer alternativen, nicht näher dargestellten Ausführungsform werden die Relais R1 bis R8 durch lokale Verschaltung der Stromleitsegmente C1 bis C8 mit diskreten Bereichen einer Kondensatorenbank ersetzt und die entsprechenden Kondensatoren zum jeweils gewünschten Zeitpunkt geladen bzw. entladen.

Durch die Segmentierung der Formelektroden 1 a und 1b kann der lokale Stromfluss durch die zu fügenden Platten 4a und 4b definiert eingestellt werden. Insbesondere kann die Fügeaufgabe in mehrere Teilschritte zerlegt werden. Dabei kann der Schweißstrom, der durch die Platten 4a und 4b fließt, zeitlich versetzt, überlappend und segmentweise aufgebracht werden, wobei hier in Wellen von einer Seite zur anderen, von beiden Seiten gleichzeitig oder vom Zentrum ausgehend und zu den Seiten verlaufend geschweißt werden kann.

In einer weiteren Ausführungsform kann ein aus den beiden Formelektroden 1 a und 1b gebildetes Schweißwerkzeug sowohl entlang der x- als auch der y-Achse, d.h. in beiden Richtungen, segmentiert sein, so dass auch eine kreisförmig umlaufende Schweißstromwelle bei umlaufenden Fügenähten erzielt werden kann.

In einer weiteren Ausführungsform können die zu verbindenden Platten 4a, 4b im Fügebereich 5 in nicht näher dargestellter Art und Weise mit einer geeigneten Beschichtung zur Verbesserung des Schweißstromverlaufs bzw. zur Reduzierung der Schmelztemperatur durch beschichtungsimmanente Schmelzpunktemiedriger - bei Stahl z.B. Kohlenstoff - versehen, während der nicht zu fügende Bereich gleichzeitig mit einer elektrisch schlecht leitenden und nach dem Fügevorgang ggf. entfernbaren Beschichtung zur Vermeidung von Schweißfehlströmen versehen werden kann.

Alternativ zum Einsatz einer entsprechenden Beschichtung ist auch ein Aufrauhen der Oberfläche der zu fügenden Platten 4a, 4b möglich, um die Kontaktfläche für den Schweißprozess vorzukonditionieren.

## Patentansprüche

1. Verfahren zum Fügen von Bipolarplatten (4a, 4b), insbesondere für einen Brennstoffzellenstapel, **dadurch gekennzeichnet, dass** zumindest zwei insbesondere geprägte Platten (4a, 4b) in eine vorgegebene Fügeposition (5) zueinander angeordnet und stoff- und formschlüssig durch Schweißen gefügt werden.

2. Verfahren nach Anspruch 1, **dadurch gekennzeichnet, dass** die Platten (4a, 4b) im Kondensator-Entladungs-Schweißverfahren gefügt werden.

3. Verfahren nach Anspruch 2, **dadurch gekennzeichnet, dass** mindestens 80 % der einzubringenden Schweißenergie innerhalb der ersten 10 ms nach Beginn der Kondensatorentladung fließen.

4. Verfahren nach einem der Ansprüche 1 bis 3, **dadurch gekennzeichnet, dass** die Platten (4a, 4b) in der Fügeposition (5) vor dem Schweißen miteinander verpresst werden.

5. Verfahren nach Anspruch 4, **dadurch gekennzeichnet, dass** die Platten mit einem vorgegebenen Anpressdruck (p) von 0,1 bar bis 2000 bar, insbesondere von 20 bar bis 30 bar vorgespannt werden.

6. Verfahren nach Anspruch 5, **dadurch gekennzeichnet, dass** der vorgegebene Anpressdruck (p) durch Andrücken eines Formelektrodenpaares (1 a, 1 b) an der Fügeposition (5), insbesondere entlang einer Fügenaht, eingestellt wird.

7. Verfahren nach einem der Ansprüche 1 bis 6, **dadurch gekennzeichnet, dass** die Platten (4a, 4b) derart zueinander angeordnet sind, dass aneinander liegende Plattenstrukturen, insbesondere Nuten (6a, 6b) miteinander gefügt werden.

8. Verfahren nach einem der Ansprüche 1 bis 7, **dadurch gekennzeichnet, dass** die Platten (4a, 4b) aus gleichem oder unterschiedlichem, metallischem Material gefertigt werden.

9. Verfahren nach einem der Ansprüche 1 bis 8, **dadurch gekennzeichnet, dass** zumindest eine oder beide Platten (4a, 4b) aus Titan oder aus einer titanhaltigen Legierung gefertigt werden.

10. Verfahren nach einem der Ansprüche 1 bis 9, **dadurch gekennzeichnet, dass** für zumindest eine oder beide Platten (4a, 4b) ein Edelstahl, insbesondere mit hervorstehenden Borcarbideinschtüssen verwendet wird.

11. Verfahren nach einem der Ansprüche 1 bis 10, **dadurch gekennzeichnet, dass** zumindest eine oder beide Platten (4a, 4b) vor dem Fügen mit einer Schutzschicht versehen werden.

12. Verfahren nach Anspruch 11, **dadurch gekennzeichnet, dass** die Platte (4a, 4b) ein- oder beidseitig galvanisch und/oder mit einem Sol-Gel-, PVD- und/oder CVD-Verfahren beschichtet wird.

13. Verfahren nach Anspruch 11 oder 12, **dadurch gekennzeichnet, dass** die Schutzschicht durch Nitrieren der Oberfläche der Platte (4a, 4b) unter Stoff-, Temperatur- und/oder Druckeinwirkung gebildet wird.

14. Werkzeug zur Durchführung des Verfahrens nach einem der Ansprüche 1 bis 13, **gekennzeichnet durch** ein Kondensator-Entladungs-Schweißgerät (1).

15. Werkzeug nach Anspruch 14, **dadurch gekennzeichnet, dass** ein dem Kondensator-Entladungs-Schweißgerät (1) zugehöriges Elektrodenpaar als Formelektrodenpaar (1a, 1b) ausgebildet ist.

16. Werkzeug nach Anspruch 15, **dadurch gekennzeichnet, dass** das Formelektrodenpaar (1 a, 1 b) dem Anpressen und dem anschließenden Verschweißen der zu fügenden Platten (4a, 4b) dient.

17. Werkzeug nach einem der vorhergehenden Ansprüche 14 bis 16, **dadurch gekennzeichnet, dass** zumindest eine Elektrode eines Elektrodenpaares eine oder mehrere insbesondere gesinterte Schichten aufweist, wobei die Schichten bevorzugt unterschiedliche elektrische Leitfähigkeiten und/oder Zähigkeiten aufweisen.

18. Werkzeug nach einem der vorhergehenden Ansprüche 14 bis 17, **dadurch gekennzeichnet, dass** zumindest eine Elektrode eines Elektrodenpaares zumindest einen Kern und eine Deckschicht umfasst, wobei der Kern weicher und/oder zäher als die Deckschicht ist.

19. Werkzeug nach einem der vorhergehenden Ansprüche 14 bis 18, **dadurch gekennzeichnet, dass** die Elektroden(1a, 1b) eines Elektrodenpaares spitz ausgeführt sind und einander gegenüberstehend unter Zwischenschaltung der zu fügenden Platten (4a, 4b) angeordnet sind, wobei die Elektroden (1a, 1b) die Platten (4a, 4b) linienförmig kontaktieren.

20. Werkzeug nach einem der vorhergehenden Ansprüche 14 bis 18, **dadurch gekennzeichnet, dass** die Elektroden (1a, 1b) eines Elektrodenpaares eben ausgeführt sind und einander gegenüberstehend unter Zwischenschaltung der zu fügenden Platten (4a, 4b) angeordnet sind, wobei die Elektroden (1a, 1 b) die Platten (4a, 4b) flächig kontaktieren.

21. Werkzeug nach einem der vorhergehenden Ansprüche 14 bis 20, **dadurch gekennzeichnet, dass** die Elektroden (1a, 1 b) segmentierte Stromeinleitungsbereiche (S1 bis S8, R1 bis R8) aufweisen.

22. Werkzeug nach Anspruch 21, **dadurch gekennzeichnet, dass** die Elektroden (1a, 1b) in Längsausdehnung und/oder in Querausdehnung segmentierte Stromeinleitungsbereiche (S1 bis S8, R1 bis R8) aufweist.
